# EUROPEAN PATENT SPECIFICATION

(11) **EP 4 233 269 B1**
(45) Date of publication and mention of the grant of the patent: **05.11.2025**
(21) Application number: 21791124.7
(22) Date of filing: 16.09.2021
(51) Int. Cl.: H04L 9/08

(54) **SYSTEM AND METHOD FOR RELIABLE DESTRUCTION OF CRYPTOGRAPHIC KEYS**
SYSTEM UND VERFAHREN ZUR ZUVERLÄSSIGEN ZERSTÖRUNG KRYPTOGRAPHISCHER SCHLÜSSEL
SYSTÈME ET PROCÉDÉ DE DESTRUCTION FIABLE DE CLÉS CRYPTOGRAPHIQUES

(30) Priority: 23.10.2020 US 202063104874 P; 29.07.2021 US 202117388900
(43) Date of publication of application: 30.08.2023
(73) Proprietor: Google LLC, Mountain View, CA 94043 (US)
(72) Inventor: ALSTON, Aubrey, Douglas, Mountain View, CA 94043 (US); STULTS, Jonathan, Michael, Mountain View, CA 94043 (US)
(74) Representative: Betten & Resch
(86) International application number: PCT/US2021/050589
(87) International publication number: WO 2022/086648

(56) References cited:
- CN-A- 111 177 109
- XIE GUOCHAO, CHUNG YEH-CHING: "Bucket-Based Expiration Algorithm: Improving Eviction Efficiency for In-Memory Key-Value Database", 2020 2ND SYMPOSIUM ON SIGNAL PROCESSING SYSTEMS, ACMPUB27, NEW YORK, NY, USA, 28 September 2020 (2020-09-28), pages 248 - 259, XP058583679, ISBN: 978-1-4503-8858-0, DOI: 10.1145/3422575.3422797

## Description

### CROSS-REFERENCE TO RELATED APPLICATIONS

The present application is a continuation of U.S. Patent Application No. 17/388,900, filed July 29, 2021, which claims the benefit of the filing date of U.S. Provisional Patent Application No. 63/104,874 filed October 23, 2020.

### BACKGROUND

Data is often protected by one or more data encryption keys (DEKs), which are encrypted by some high-value master key. As a result, the ciphertext takes on properties determined by the key. For example, ciphertext is subject to access control applied to the high value master key. The role of the high-value master key has traditionally been played by keys which are reliably confidential, durable, and available.

Chinese patent application CN 111177109 A; and G. Xie, Y. Chung: "Bucket-Based Expiration Algorithm: Improving Eviction Efficiency for In-Memory Key-Value Database" disclose examples of bucket-based strategies for automated management and deletion of expired encryption keys.

### BRIEF SUMMARY

Some applications require ephemerality of keys, where the keys are guaranteed to be destroyed. For example, applications such as temporary user identifiability, data recovery from active storage, or distributed secure sockets layer (SSL) session key management may require key ephemerality.

One aspect of the disclosure provides a method of providing a cloud service for encrypting data with reliable key destruction, comprising maintaining a logical treadmill of multiple unique encryption keys that are made available and destroyed according to a predetermined schedule, and providing an interface that grants cryptographic oracle access to the encryption keys on the treadmill. The deletion timestamp may indicate a maximum time to live before expiration.

According to some examples, each encryption key has a deletion timestamp indicating when the key will be deleted from the treadmill. Maintaining the logical treadmill may include comparing the deletion timestamp for each encryption key to a current time. It may further include removing a given key from the logical treadmill when the deletion timestamp is equivalent to or later than the current time.

According to an example, the encryption keys are made available according to a first predetermined schedule and are destroyed according to a second predetermined schedule different from the first predetermined schedule.

In some examples, the method may further include receiving data from a client, encrypting the data using one of the keys from the logical treadmill, and after a predetermined period of time, automatically destroying the one of the keys used to encrypt the data. The method may further include receiving, from the client, an indication of a duration of time for which the data should be accessible, wherein the key used to encrypt the data is selected from the treadmill based on an amount of time remaining between a current time and the deletion timestamp, the amount of time remaining corresponding to the duration of time indicated by the client.

In some examples, maintaining the logical treadmill may include deploying a plurality of distributed server processes, each of the server processes maintaining key material and executing a loop for removal of the key material from memory at the deletion timestamp. The plurality of distributed server processes may be located within a same physical region.

Another aspect of the disclosure provides a system for secure encryption. The system may include one or more processors configured to maintain a logical treadmill of multiple unique encryption keys that are made available and destroyed according to a predetermined schedule, and an interface that grants cryptographic oracle access to the encryption keys on the treadmill. Each encryption key has a deletion timestamp indicating when the key will be deleted from the treadmill. The encryption keys may be made available according to a first predetermined schedule and destroyed according to a second predetermined schedule different from the first predetermined schedule. The deletion timestamp may indicate a maximum time to live before expiration.

The one or more processors may be configured to delete all keys in the treadmill based on comparing the deletion timestamp for each encryption key to a current time. For example, the processors may remove a given key from the logical treadmill when the deletion timestamp is equivalent to or later than the current time.

The one or more processors may be further configured to receive data from a client, encrypt the data using one of the keys from the logical treadmill, after a predetermined period of time, automatically destroy the one of the keys used to encrypt the data. The data received from the client is accompanied by an encryption request indicating a duration of time for which the data should be accessible, wherein the key used to encrypt the data is selected from the treadmill based on an amount of time remaining between a current time and the deletion timestamp, the amount of time remaining corresponding to the duration of time indicated by the client.

According to some examples, the one or more processors include a plurality of distributed server processes, each of the server processes maintaining key material and executing a loop for removal of the key material from memory at the deletion timestamp. The plurality of distributed server processes may be located within a same physical region.

### BRIEF DESCRIPTION OF THE DRAWINGS

Fig. 1 is a schematic diagram of an example logical treadmill for encryption according to aspects of the disclosure.
Fig. 2 is a block diagram of an example system according to aspects of the disclosure.
Fig. 3 is a block diagram of another example system according to aspects of the disclosure.
Fig. 4 is a flow diagram illustrating an example method according to aspects of the disclosure.

### DETAILED DESCRIPTION

The present disclosure provides for a logical treadmill of encryption keys which are created, distributed, and destroyed on a predictable schedule. It further provides for a read-only interface for a remote procedure call (RPC) infrastructure, the interface providing cryptographic oracle access to keys on the treadmill.

The logical treadmill includes a set of encryption keys that rotate at a particular granularity. For example, every X minutes a key will come into existence, and will expire after Y minutes. As a system guarantee, the keys will only ever exist in volatile memory, and will be erased from all server instances when they expire.

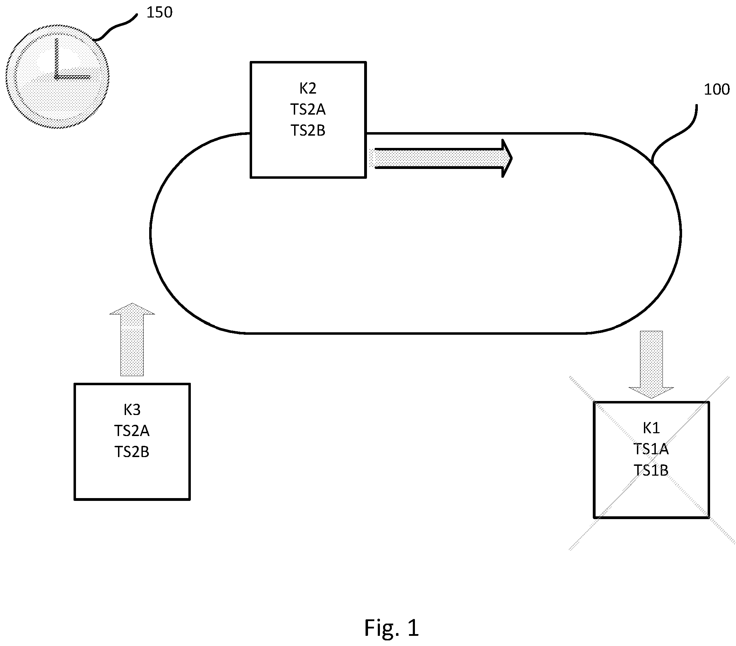

Fig. 1 illustrates an example of encryption key treadmill 100. The encryption key treadmill 100 includes a periodically updated sequence of unique encryption keys K1, K2, K3, etc. Each encryption key is identified by availability timestamp TS1A, TS2A, TS3A, and is subject to a deletion timestamp TS1B, TS2B, TS3B. The deletion timestamp may be determined by a system-wide time to live (TTL), defined against a globally observed clock 150.

As shown in Fig. 1, key K1 is added to the treadmill 100 at time TS1A when it becomes available. Key K1 may be used for encrypting data from a client until it expires at TS1B. When the key K1 expires, or even shortly before, key K1 is removed from the treadmill 100 and permanently erased.

One or more second keys K2 may be added to the treadmill 100 while the first key K1 is still in rotation or after it expires. For example, availability timestamp TS2A of the second key K2 may be earlier, later, or equal to expiration timestamp TS1B of the first key K1. While only one key is shown in Fig. 1 as being on the treadmill 100 at a given time, it should be understood that multiple keys may be in rotation at any given time.

New keys K3 may be periodically added to the treadmill 100. For example, as one or more keys expire, one or more new keys may be added. According to other examples, new keys may be added at regular intervals. For example, a new key may be added every minute, 30 minutes, hour, several hours, etc.

The system-wide TTL used to determine when the keys expire may be, for example, minutes, hours, days, weeks, months, etc. In some implementations, the max TTL may vary from one key to the next. In some examples, the system-wide TTL may be reconfigured. As such, some keys added to the treadmill before the reconfiguration may have a first TTL, while other keys added to the treadmill after the reconfiguration may have a second TTL. By appending new keys at well-defined, configurable intervals (e.g. one hour), and by configuring the system-wide TTL appropriately (e.g. 30 days), the key treadmill reliably guarantees that for any TTL from 0 to 30 days, some key is guaranteed to be destroyed within one hour of the TTL.

Updates to the treadmill may occur within a distributed operation, herein referred to as a "shred loop". Execution of the shred loop and replication of the key treadmill may be coordinated by a distributed lock service. Logically, the shred loop globally deletes all keys at the front of the treadmill having deletion time, e.g., indicated by the expiration timestamp, less than or equal to Now(). For example, the shred loop global deletes all records of keys from the treadmill 100, and each server also evicts its copy from memory. Once the key expires and all copies of the key are erased from memory, data encrypted by the key can no longer be accessed. The shred loop further appends a new key with availability time, e.g., indicated by the availability timestamp, equal to the current time of the global clock 150 to the end of the treadmill.

The treadmill may expose a read-only interface, such as through a remote procedure call (RPC) structure, providing access to ephemeral keys on the treadmill. The interface may implement primary cryptographic operations. Such operations may include, for example, a *wrap* operation, which ephemerally wraps a short data blob using a key on the treadmill, and an *unwrap* operation, which unwraps ciphertext produced by the wrap operation if the wrapping key is still available.

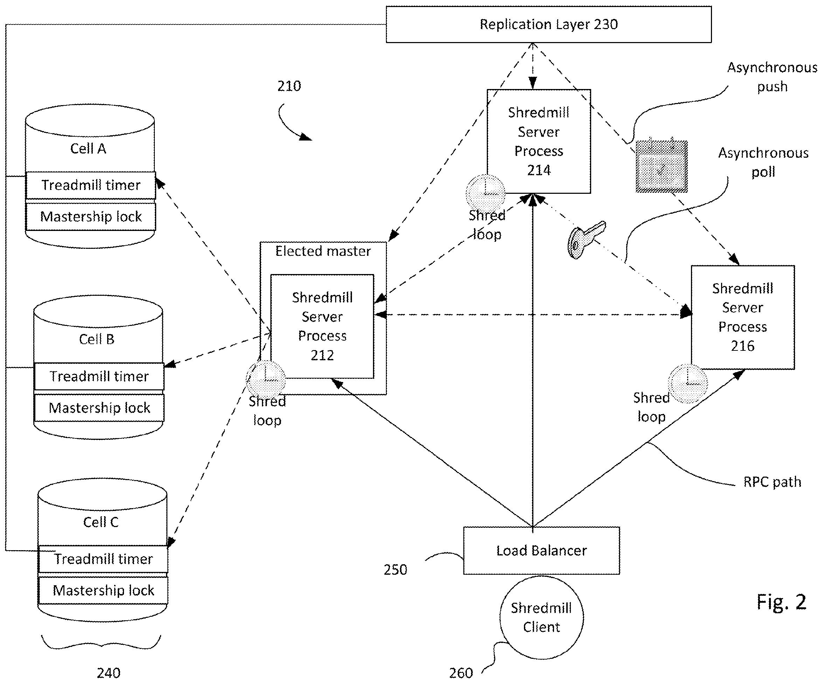

Fig. 2 illustrates an example system in which the encryption key treadmill is distributed across a plurality of nodes. For example, as shown, a region 210 includes a plurality of nodes 212, 214, 216. The nodes may be, for example, servers, replicas, or any other computing devices operating in a distributed system, such as in the "cloud". In this example, the nodes are instances of a server process. As described herein, the terms server process, replica, and node may be used interchangeably.

The nodes may receive requests from a client 260, wherein such requests are distributed amongst the nodes 212-216 by load balancer 250. The requests may be, for example, to encrypt data. The nodes 212-216 encrypt the data using keys from the logical treadmill, and returns the data back to the client 260. In this regard, the nodes 212-216 provide a cloud service to the client 260, in which service data is encrypted using a logical treadmill of encryption keys.

The nodes 212, 214, 216 are communicatively coupled to a distributed lock service 240 including Cell A, Cell B, Cell C. For example, the nodes 212-216 may be coupled to the distributed lock service 240 through a replication layer 230. Through the replication layer 230, updates are pushed to all nodes 212-216. The updates may include, for example, key schedules, as opposed to key material. The updates may be pushed asynchronously to the nodes 212-216.

The encryption key treadmill state consists of (i) a public treadmill timer which times events on the encryption key treadmill and (ii) private key material for each key on the treadmill. The public treadmill timer is replicated using the distributed lock service 240. Within a given regionalized deployment, treadmill key material is replicated and strictly isolated to instance RAM, such as by using lightweight synchronization over protected channels.

The distributed shred loop which keeps the treadmill running is implemented using master election and local work at each server instance. This master may be the sole replica responsible for propagating new key versions and setting a system-wide view of treadmill state. All other nodes watch the treadmill files in distributed lock service 240, and then perform work to locally shred keys and synchronize with peers if local loss or corruption is detected.

The system elects a single master to perform treadmill management. In the example of Fig. 2, node 212 is elected as master. For example, the elected master node 212 pushes a definitive state to the distributed lock service 240, and pushes a description of what keys exist to the distributed lock service 240. The election of the master node 212 may enforce that there is only ever a single writer for all timer replicas. Timer files will be written to by a single master replica and will be world-readable, available to be watched via the replication layer 230.

In distributed lock service cells A-C, the mastership lock box keeps a consistent and authoritative view of which server process is master. As the nodes 212-216 participate in a master election protocol, this view is updated, and then the nodes are able to definitively determine if and when they are master.

In some examples, the master keeps a definitive key schedule for use by the nodes 212-216. The schedule may define when particular keys become available and when they should be destroyed. The master 212 uses the definitive key schedule to update the logical treadmill.

By fixing key generation frequency and enforcing that only one new key may be considered 'propagating' at a time, schedule predictability is implemented in the shred loop. The schedule predictability may be provided through one or more parameters. Such parameters may include, for example, that at least one key is propagating through the system at a given instant. Further, each key has a fixed TTL, determined by the master replica which added it. Keys are added to the end of the schedule in order of increasing expiration time. Subsequent key expiration times are separated by a fixed time to shred (TTS). Subsequent key availability intervals either overlap or have no time delay between them.

A key on the treadmill is considered in distribution if the current time is less than the availability time for the key. The system may, in some examples, enforce that at least one key will be in distribution at a given time by means of the distributed shred loop.

The master node 212 wakes up frequently to check if a new key should be added to the treadmill. If a new key should be added, the master node 212 will push an update to all nodes 214, 216. For example, such updates may be pushed by the master node 212 through the distributed lock service 240 and the replication layer 230. The updates may include a key schedule, as opposed to key material. All nodes 212-126 wake up frequently to check if they are missing an update according to the current time. If they missed an update, they attempt to synchronize with a randomly chosen neighbor. For example, if node 216 wakes up and determines, based on the global clock, that it missed an update, the node 216 may attempt to synchronize with the node 214. For example, the node may asynchronously poll a peer node for the key material. The node may determine that it missed an update by, for example, resolving a local copy of the treadmill timer through the replication layer 230, and checking whether the node has the key material for all keys in the timer. If it does not, then the node may synchronize with a peer.

Public treadmill state will be definitively replicated across cells A-C in the distributed lock service 240. While three cells are shown in Fig. 2, it should be understood that the distributed lock service 240 may include any number of cells. For each cell, a serializable data structure containing a treadmill timer will be written to a file. The serializable data structure indicates an availability timestamp and a deletion timestamp. Definitive state is determined using majority rule, such as wherein a treadmill timer entry is considered to be present if written to a majority of the cells.

The treadmill state may be coordinated through an internal administrative interface exposed by the nodes 212-216. The interface may be used to coordinate treadmill maintenance and synchronization. The internal administrative interface will respond only to server instances in the same regionalized deployment 210. This interface supports operations including an *update* operation, used by a master to push treadmill state to non-master replicas, and an *inspect* operation, used by all replicas for synchronization. The update takes a treadmill schedule and a map of key material and installs both in the local replica. The *inspect* operation returns the locally known treadmill schedule and all known key material.

At each node 212-216, a replica shred loop runs frequently. The replica shred loop performs mostly local work to shred expired keys, detect loss/corruption, and receive missed updates. For example, the replica shred loop may be run to resolve the current treadmill state from the distributed lock service 240. This information may be provided via an asynchronous replication layer watcher registered for the associated files. The replica shred loop may further evict any key known to the replica that is not present in the schedule or which has expired. For all non-expired keys in the schedule, the replica watch loop may verify that non-corrupt key material is available for the key. For example, internally, each server may maintain a checksum which can be used for this verification. If unavailable or corrupt key material is detected, the *inspect* operation may be performed. For example, the node may inspect one or more randomly chosen peers and search each peer's state for the desired key material.

At the elected master instance 212, a master shred loop runs, and performs mostly local work to correct global schedule loss and advance the schedule. Following the regularly scheduled replica loop, the master instance 212 will advance the schedule such that it is up to date at a target time and contains a schedule buffer. The master instance takes the target time as the execution timestamp of the current shred loop cycle, and corrects any missing or corrupt keys in the schedule. Correcting missing or corrupt keys may include, for example, generating new key material and updating the key hash for any key which should be available at any point within the schedule buffer of the target time. The master node further checks whether the schedule is up to date already at the target time plus the schedule buffer. For example, the master checks whether some key in the schedule is propagating. If no key is propagating, the master node will advance the schedule and push the update.

Advancing the schedule may include executing a procedure, wherein if the schedule is empty, a key is added. The added key may be added with an availability time equivalent to the target time, plus a time to shred, minus a TTL. The added key may be added with a deletion time equivalent to the availability time plus the TTL. The procedure for advancing the schedule may further include, while the last key in the schedule is not propagating at the target time, calculating an absolute deletion time and a distribution and availability time for the new key. The absolute deletion time may be calculated using the last deletion time plus the time to shred. The availability time may be calculated as a maximum of a last availability time, or the deletion time minus the TTL. The procedure may further remove all keys from the schedule which are expired by the target time.

Pushing the update may include updating the treadmill files in the distributed lock service 240. The updated treadmill state, with both key schedules and key material, may be pushed to all nodes 212-216 with an *update* call to each. In some cases, a fraction of the nodes may miss the update. In this event, those nodes will self-correct in the next local replica shred loop. The master node may perform server authorization checks before completing the push and/or before accepting requests to inspect. For example, the master node may apply a security policy to the RPC channel between peers, requiring that the peers authenticate as process servers in the system in the same regionalized deployment.

As an externally facing cloud service, the system exposes a cryptographic oracle interface to ephemeral keys in a given regionalized deployment as an RPC infrastructure service. The interface may support ephemeral envelope encryption via the *wrap* and *unwrap* operations for RPCs, discussed above. Ephemerality may be guaranteed by the encryption key treadmill, so that by appending new keys at well-defined, configurable intervals (e.g. one hour), and by configuring the system-wide TTL appropriately (e.g. 30 days), the key treadmill reliably guarantees that for any TTL from 0 to 30 days, some key is guaranteed to be destroyed within one hour of the TTL.

Each node 212-216 in the system will have local access to the encryption key treadmill timer, such as via the distributed lock service 240 and updates from the master 212. Each node 212-216 will further have local access to encryption key material obtained through peer synchronization.

The cells A-C of the distributed lock service 240 may store a timer which relates key hashes to events for those keys. The timer may be, for example, a sequence of entries containing for each key: the key hash, a creation time for the key, and a deletion time for the key. According to some examples, the timer may further contain other information corresponding to the key. There may be one entry per key hash. In that regard, the timer can be composed into a map from key hash to key schedule, with creation time and deletion time. The sequence may be ordered by creation time to allow efficient search. The timer is distributed to the nodes 212-216 via the replication layer 230. Each node 212-216 may store a map relating key hashes to key material, such as the map of key material mentioned above in connection with the update operation. When executing the *wrap* operation to encrypt data, keys may be resolved by TTL, such as by searching the map according to deletion time. When executing the *unwrap* operation to decrypt the data, a node may consult its locally stored map to resolve the keys.

On each wrapping operation, the replica will resolve a key to use on the treadmill through a policy which uses the first key in the schedule with a deletion timestamp occurring after the expiration time. Using this key, the system will encrypt an envelope containing plaintext, thereby creating a wrapped key. In addition to the wrapped key and the key name, the system will return (i) the hash of the key used to produce the ciphertext, (ii) the region of the instance which served the request, and (iii) the final expiration, as determined by the key used for wrapping.

On each unwrapping request, the server instance will use the key hash to resolve the appropriate key. This key will be used to unwrap ciphertext. If unwrapping is successful, this will yield key bytes and a fingerprint authenticating the plaintext origin. If a user making the unwrapping request satisfies the access policy, the plaintext is returned to the user.

The system implements a region-aware security model. If the system is compromised in one region, an attacker cannot obtain key material managed by the system in any other region. All key material synchronization endpoints will only serve instances in the same region, and every master will refuse to push to invalid peers. Moreover, if the system is compromised in one region, an attacker cannot use the compromised instance to unwrap or re-derive anything wrapped or derived in another region.

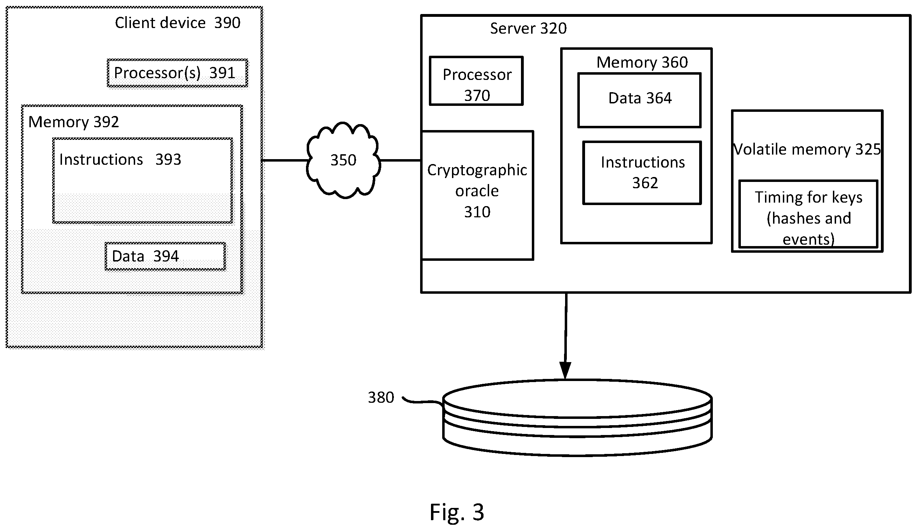

Fig. 3 illustrates an example system illustrating examples of internal components of the system of Fig. 2. In particular, the system includes a client device 390 in communication with one or more servers 320 through a network 350, wherein the one or more servers provide for encryption of data supplied by the client 390.

The server 320 may run a service that receives requests, such as from the client 390, to encrypt or decrypt data. According to some examples, the encryption may be performed using the cryptographic oracle 310. While the cryptographic oracle 310 is shown as a component within the server 320, it should be understood that in other examples the cryptographic oracle 310 may be a component in external communication with the server 320. In either examples, the cryptographic oracle 310 may be a key management library, a hardware security module (HSM), or other implementation. In further examples, the cryptographic oracle 310 may be a software module executed by the one or more processors 370.

The server 320 includes one or more processors 370. The processors 370 can be any conventional processors, such as commercially available CPUs. Alternatively, the processors can be dedicated components such as an application specific integrated circuit ("ASIC") or other hardware-based processor. Although not necessary, the server 320 may include specialized hardware components to perform specific computing processes.

The memory 360 can store information accessible by the processor 370, including instructions that can be executed by the processor 370 and that can be retrieved, manipulated or stored by the processor 370.

The instructions can be a set of instructions executed directly, such as machine code, or indirectly, such as scripts, by the processor 370. In this regard, the terms "instructions," "steps" and "programs" can be used interchangeably herein. The instructions can be stored in object code format for direct processing by the processor 370, or other types of computer language including scripts or collections of independent source code modules that are interpreted on demand or compiled in advance. Functions, methods, and routines of the instructions are explained in more detail in the foregoing examples and the example methods below.

The data can be retrieved, stored or modified by the processor 370 in accordance with the instructions. The data can also be formatted in a computer-readable format such as, but not limited to, binary values, ASCII or Unicode. Moreover, the data can include information sufficient to identify relevant information, such as numbers, descriptive text, proprietary codes, pointers, references to data stored in other memories, including other network locations, or information that is used by a function to calculate relevant data.

Although Fig. 3 functionally illustrates the processor, memory, and other elements of server 320 as being within the same block, the processor, computer, computing device, or memory can actually comprise multiple processors, computers, computing devices, or memories that may or may not be stored within the same physical housing. For example, the memory can be a hard drive or other storage media located in housings different from that of the server 320. Accordingly, references to a processor, computer, computing device, or memory will be understood to include references to a collection of processors, computers, computing devices, or memories that may or may not operate in parallel. For example, the server 320 may include server computing devices operating as a load-balanced server farm, distributed system, etc. Yet further, although some functions described below are indicated as taking place on a single computing device having a single processor, various aspects of the subject matter described herein can be implemented by a plurality of computing devices, for example, communicating information over a network.

The memory 360 can store information accessible by the processor 370, including instructions 362 that can be executed by the processor 370. Memory can also include data 364 that can be retrieved, manipulated or stored by the processor 370. The memory 360 may be a type of non-transitory computer readable medium capable of storing information accessible by the processor 370, such as a hard-drive, solid state drive, tape drive, optical storage, memory card, ROM, RAM, DVD, CD-ROM, write-capable, and read-only memories. The processor 370 can be a well-known processor or other lesser-known types of processors. Alternatively, the processor 370 can be a dedicated controller such as an ASIC.

The instructions 362 can be a set of instructions executed directly, such as machine code, or indirectly, such as scripts, by the processor 370. In this regard, the terms "instructions," "steps" and "programs" can be used interchangeably herein. The instructions 362 can be stored in object code format for direct processing by the processor 370, or other types of computer language including scripts or collections of independent source code modules that are interpreted on demand or compiled in advance.

The data 364 can be retrieved, stored or modified by the processor 370 in accordance with the instructions 362. For instance, although the system and method is not limited by a particular data structure, the data 364 can be stored in computer registers, in a relational database as a table having a plurality of different fields and records, or XML documents. The data 364 can also be formatted in a computer-readable format such as, but not limited to, binary values, ASCII or Unicode. Moreover, the data 364 can include information sufficient to identify relevant information, such as numbers, descriptive text, proprietary codes, pointers, references to data stored in other memories, including other network locations, or information that is used by a function to calculate relevant data.

The instructions 362 may be executed to encrypt data received from the client device 390 using keys from the logical treadmill. The instructions 362 may further be executed to update the logical treadmill, such as by executing the master shred loop or replica shred loop described above.

The server 320 may further include a volatile memory 325, either integrated with the memory 360 or as a separate memory unit. The volatile memory 325 may be responsible for storing key material, such as hashes and events.

Further to the example systems described above, example methods are now described. Such methods may be performed using the systems described above, modifications thereof, or any of a variety of systems having different configurations. It should be understood that the operations involved in the following methods need not be performed in the precise order described. Rather, various operations may be handled in a different order or simultaneously, and operations may be added or omitted.

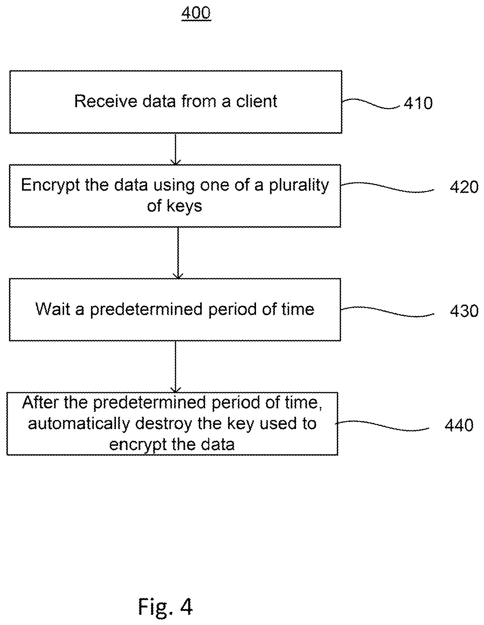

Fig. 4 illustrates an example method 400 for encrypting data with reliable key destruction. The method may be performed by, for example, a system of one or more distributed server processes.

In block 410, data is received from a client. For example, the data may include a write to a database or any other information. The data may be information that the client would like to be temporarily available. According to some examples, along with a request providing the data, the client may also specify a duration for which the data should be accessible.

In block 420, the data is encrypted using one of a plurality of keys. For example, each of the plurality of keys may be added to a logical treadmill of available keys at predetermined intervals. Moreover, each of the plurality of keys may have a predetermined expiration. The availability and expiration may be designated by one or more timestamps. According to the example where the client specifies a duration for which the data may be accessible, the expiration of the key may correspond to the specified duration. The one of the keys used to encrypt the data may be any of the available keys on the treadmill. Encrypting the data may include, for example, executing a *wrap* operation.

In block 430, a predetermined period of time passes. For example, the predetermined period of time may correspond to a duration of time between encryption of the data and when the key expires.

In block 440, the key used to encrypt the data is destroyed. For example, all records of the key may automatically be deleted from the logical treadmill. Moreover, all key materials for the key are automatically erased from memory at the server processes. As the key is destroyed, the data can no longer be accessed.

In some examples, the duration for which the data is accessible may be extended. For example, the client may request that the data be accessible for an additional period of time. In such case, the data may be re-encrypted with a new key from the logical treadmill. For example, prior to expiration, the data may be unwrapped and then re-wrapped using the new key.

By performing encryption using keys from the logical treadmill as described above, the client is provided with a cryptographic guarantee. Where the data is intended to be kept secure, the destruction of the key used to encrypt it can be as secure as destroying the data itself. For example, even if a copy of the encrypted data remains in memory somewhere, the plaintext data will not be accessible because the key is destroyed.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method of providing a cloud service for encrypting data, the method comprising:
maintaining a logical treadmill of multiple unique encryption keys that are made available and destroyed according to a predetermined schedule;
providing an interface that grants cryptographic oracle access to the encryption keys on the logical treadmill;
receiving data from a client, wherein the data received from the client is accompanied by an encryption request indicating a duration of time for which the data should be accessible; and
encrypting the data using one of the encryption keys from the logical treadmill,
wherein the encryption key used to encrypt the data is selected from the logical treadmill based on an amount of time remaining between a current time and a deletion timestamp, the amount of time remaining corresponding to the duration of time indicated by the client.

2. The method of claim 1,
wherein each encryption key has the deletion timestamp indicating when the encryption key will be deleted from the logical treadmill; and
wherein maintaining the logical treadmill comprises comparing the deletion timestamp for each encryption key to the current time.

3. The method of claim 2, further comprising removing a given key from the logical treadmill when the deletion timestamp is equivalent to or later than the current time.

4. The method of claim 1, wherein the encryption keys are made available according to a first predetermined schedule and are destroyed according to a second predetermined schedule different from the first predetermined schedule.

5. The method of claim 1, wherein the deletion timestamp indicates a maximum time to live before expiration.

6. The method of claim 1, further comprising:
after a predetermined period of time, automatically destroying the encryption key used to encrypt the data.

7. The method of claim 1, wherein maintaining the logical treadmill comprises deploying a plurality of distributed server processes, each of the server processes maintaining key material and executing a loop for removal of the key material from memory at the deletion timestamp.

8. The method of claim 7, wherein the plurality of distributed server processes are located within a same physical region.

9. A system for secure encryption, comprising:
an interface that grants cryptographic oracle access to multiple unique encryption keys on a logical treadmill; and
one or more processors configured to:
maintain the logical treadmill of the multiple unique encryption keys that are made available and destroyed according to a predetermined schedule;
receive data from a client, wherein the data received from the client is accompanied by an encryption request indicating a duration of time for which the data should be accessible; and
encrypt the data using one of the encryption keys from the logical treadmill,
wherein the encryption key used to encrypt the data is selected from the logical treadmill based on an amount of time remaining between a current time and a deletion timestamp, the amount of time remaining corresponding to the duration of time indicated by the client.

10. The system of claim 9, wherein maintaining the logical treadmill further causes the one or more processors to delete all keys in the logical treadmill based on comparing the deletion timestamp for each encryption key to the current time.

11. The system of claim 10, wherein maintaining the logical treadmill further causes the one or more processors to remove a given key from the logical treadmill when the deletion timestamp is equivalent to or later than the current time.

12. The system of claim 9, wherein the encryption keys are made available according to a first predetermined schedule and are destroyed according to a second predetermined schedule different from the first predetermined schedule.

13. The system of claim 9,
wherein the deletion timestamp indicates a maximum time to live before expiration; and
wherein the one or more processors are further configured to after a predetermined period of time, automatically destroy the one of the keys used to encrypt the data.

14. The system of claim 9, wherein the one or more processors comprise a plurality of distributed server processes, each of the server processes maintaining key material and executing a loop for removal of the key material from memory at the deletion timestamp.

15. The system of claim 14, wherein the plurality of distributed server processes are located within a same physical region.

## Patentansprüche

1. Verfahren zum Bereitstellen eines Cloud-Dienstes zum Verschlüsseln von Daten, wobei das Verfahren umfasst:
Aufrechterhalten eines logischen Laufbands aus mehreren eindeutigen Verschlüsselungsschlüsseln, die gemäß einem vorbestimmten Zeitplan verfügbar gemacht und zerstört werden;
Bereitstellen einer Schnittstelle, die kryptographischen Orakelzugriff auf die Verschlüsselungsschlüssel des logischen Laufbands gewährt;
Empfangen von Daten von einem Client, wobei die vom Client empfangenen Daten von einer Verschlüsselungsanfrage begleitet werden, die eine Zeitdauer angibt, für die die Daten zugänglich sein sollen; und
Verschlüsseln der Daten unter Verwendung eines der Verschlüsselungsschlüssel vom logischen Laufband,
wobei der zum Verschlüsseln der Daten verwendete Verschlüsselungsschlüssel vom logischen Laufband basierend auf einer zwischen einer aktuellen Zeit und einem Löschzeitstempel verbleibenden Zeitspanne ausgewählt wird, wobei die verbleibende Zeitspanne der vom Client angegebenen Zeitdauer entspricht.

2. Verfahren nach Anspruch 1,
wobei jeder Verschlüsselungsschlüssel den Löschzeitstempel aufweist, der angibt, wann der Verschlüsselungsschlüssel vom logischen Laufband gelöscht wird; und
wobei das Aufrechterhalten des logischen Laufbands ein Vergleichen des Löschzeitstempels für jeden Verschlüsselungsschlüssel mit der aktuellen Zeit umfasst.

3. Verfahren nach Anspruch 2, ferner umfassend das Entfernen eines gegebenen Schlüssels vom logischen Laufband, wenn der Löschzeitstempel gleich oder später als die aktuelle Zeit ist.

4. Verfahren nach Anspruch 1, wobei die Verschlüsselungsschlüssel gemäß einem ersten vorbestimmten Zeitplan verfügbar gemacht werden und gemäß einem zweiten vorbestimmten Zeitplan zerstört werden, der sich vom ersten vorbestimmten Zeitplan unterscheidet.

5. Verfahren nach Anspruch 1, wobei der Löschzeitstempel eine maximale Lebensdauer vor dem Ablauf angibt.

6. Verfahren nach Anspruch 1, ferner umfassend:
nach einer vorbestimmten Zeitdauer automatisches Zerstören des zum Verschlüsseln der Daten verwendeten Verschlüsselungsschlüssels.

7. Verfahren nach Anspruch 1, wobei das Aufrechterhalten des logischen Laufbands ein Einsetzen einer Vielzahl von verteilten Serverprozessen umfasst, wobei jeder der Serverprozesse Schlüsselmaterial aufrechterhält und eine Schleife zur Entfernung des Schlüsselmaterials aus dem Speicher zum Löschzeitstempel ausführt.

8. Verfahren nach Anspruch 7, wobei sich die Vielzahl von verteilten Serverprozessen innerhalb derselben physischen Region befindet.

9. System zur sicheren Verschlüsselung, umfassend:
eine Schnittstelle, die kryptographischen Orakelzugriff auf mehrere eindeutige Verschlüsselungsschlüssel auf einem logischen Laufband gewährt; und
einen oder mehrere Prozessoren, die konfiguriert sind für Folgendes:
Aufrechterhalten des logischen Laufbands aus den mehreren eindeutigen Verschlüsselungsschlüsseln, die gemäß einem vorbestimmten Zeitplan verfügbar gemacht und zerstört werden;
Empfangen von Daten von einem Client, wobei die vom Client empfangenen Daten von einer Verschlüsselungsanfrage begleitet werden, die eine Zeitdauer angibt, für die die Daten zugänglich sein sollen; und
Verschlüsseln der Daten unter Verwendung eines der Verschlüsselungsschlüssel vom logischen Laufband,
wobei der zum Verschlüsseln der Daten verwendete Verschlüsselungsschlüssel vom logischen Laufband basierend auf einer zwischen einer aktuellen Zeit und einem Löschzeitstempel verbleibenden Zeitspanne ausgewählt wird, wobei die verbleibende Zeitspanne der vom Client angegebenen Zeitdauer entspricht.

10. System nach Anspruch 9, wobei das Aufrechterhalten des logischen Laufbands ferner bewirkt, dass der eine oder die mehreren Prozessoren alle Schlüssel im logischen Laufband basierend auf einem Vergleichen des Löschzeitstempels für jeden Verschlüsselungsschlüssel mit der aktuellen Zeit löschen.

11. System nach Anspruch 10, wobei das Aufrechterhalten des logischen Laufbands ferner bewirkt, dass der eine oder die mehreren Prozessoren einen gegebenen Schlüssel vom logischen Laufband entfernen, wenn der Löschzeitstempel gleich oder später als die aktuelle Zeit ist.

12. System nach Anspruch 9, wobei die Verschlüsselungsschlüssel gemäß einem ersten vorbestimmten Zeitplan verfügbar gemacht werden und gemäß einem zweiten vorbestimmten Zeitplan zerstört werden, der sich vom ersten vorbestimmten Zeitplan unterscheidet.

13. System nach Anspruch 9,
wobei der Löschzeitstempel eine maximale Lebensdauer vor dem Ablauf angibt; und
wobei der eine oder die mehreren Prozessoren ferner konfiguriert sind, nach einer vorbestimmten Zeitdauer automatisch den einen der zum Verschlüsseln der Daten verwendeten Schlüssel zu zerstören.

14. System nach Anspruch 9, wobei der eine oder die mehreren Prozessoren eine Vielzahl von verteilten Serverprozessen umfassen, wobei jeder der Serverprozesse Schlüsselmaterial aufrechterhält und eine Schleife zur Entfernung des Schlüsselmaterials aus dem Speicher zum Löschzeitstempel ausführt.

15. System nach Anspruch 14, wobei sich die Vielzahl von verteilten Serverprozessen innerhalb derselben physischen Region befindet.

## Revendications

1. Procédé de fourniture d'un service cloud pour le chiffrement de données, le procédé comprenant :
le maintien d'un tapis roulant logique de multiples clés de chiffrement uniques qui sont mises à disposition et détruites selon un calendrier prédéterminé ;
la fourniture d'une interface qui accorde à l'oracle cryptographique un accès aux clés de chiffrement sur le tapis roulant logique ;
la réception de données d'un client, dans lequel les données reçues du client sont accompagnées d'une demande de chiffrement indiquant une durée pendant laquelle les données doivent être accessibles ; et
le chiffrement des données à l'aide d'une des clés de chiffrement du tapis roulant logique,
dans lequel la clé de chiffrement utilisée pour chiffrer les données est sélectionnée à partir du tapis roulant logique sur la base d'une quantité de temps restant entre une heure actuelle et un horodatage de suppression, la quantité de temps restant correspondant à la durée indiquée par le client.

2. Procédé selon la revendication 1,
dans lequel chaque clé de chiffrement possède l'horodatage de suppression indiquant quand la clé de chiffrement sera supprimée du tapis roulant logique ; et
dans lequel le maintien du tapis roulant logique comprend la comparaison de l'horodatage de suppression de chaque clé de chiffrement avec l'heure actuelle.

3. Procédé selon la revendication 2, comprenant également la suppression d'une clé donnée du tapis roulant logique lorsque l'horodatage de suppression est équivalent ou postérieur à l'heure actuelle.

4. Procédé selon la revendication 1, dans lequel les clés de chiffrement sont rendues disponibles selon un premier calendrier prédéterminé et sont détruites selon un second calendrier prédéterminé différent du premier calendrier prédéterminé.

5. Procédé selon la revendication 1, dans lequel l'horodatage de suppression indique une durée de vie maximale avant expiration.

6. Procédé selon la revendication 1, comprenant également :
après une période prédéterminée, la destruction automatique de la clé de chiffrement utilisée pour chiffrer les données.

7. Procédé selon la revendication 1, dans lequel le maintien du tapis roulant logique comprend le déploiement d'une pluralité de processus de serveur distribués, chacun des processus de serveur maintenant le matériel de clé et exécutant une boucle pour supprimer le matériel de clé de la mémoire à l'horodatage de suppression.

8. Procédé selon la revendication 7, dans lequel la pluralité de processus de serveur distribués sont situés dans une même région physique.

9. Système de chiffrement sécurisé, comprenant :
une interface qui accorde à l'oracle cryptographique l'accès à une multitude de clés de chiffrement uniques sur un tapis roulant logique ; et
un ou plusieurs processeurs configurés pour :
maintenir le tapis roulant logique des multiples clés de chiffrement uniques qui sont mises à disposition et détruites selon un calendrier prédéterminé ;
recevoir des données d'un client, dans lequel les données reçues du client sont accompagnées d'une demande de chiffrement indiquant une durée pendant laquelle les données doivent être accessibles ; et
chiffrer des données à l'aide d'une des clés de chiffrement du tapis roulant logique,
dans lequel la clé de chiffrement utilisée pour chiffrer les données est sélectionnée à partir du tapis roulant logique sur la base d'une quantité de temps restant entre une heure actuelle et un horodatage de suppression, la quantité de temps restant correspondant à la durée indiquée par le client.

10. Système selon la revendication 9, dans lequel le maintien du tapis roulant logique amène également les un ou plusieurs processeurs à supprimer toutes les clés du tapis roulant logique sur la base de la comparaison de l'horodatage de suppression de chaque clé de chiffrement avec l'heure actuelle.

11. Système selon la revendication 10, dans lequel le maintien du tapis roulant logique amène également les un ou plusieurs processeurs à supprimer une clé donnée du tapis roulant logique lorsque l'horodatage de suppression est équivalent ou postérieur à l'heure actuelle.

12. Système selon la revendication 9, dans lequel les clés de chiffrement sont rendues disponibles selon un premier calendrier prédéterminé et sont détruites selon un second calendrier prédéterminé différent du premier calendrier prédéterminé.

13. Système selon la revendication 9,
dans lequel l'horodatage de suppression indique une durée de vie maximale avant expiration ; et
dans lequel les un ou plusieurs processeurs sont également configurés pour, après une période prédéterminée, détruire automatiquement l'une des clés utilisées pour chiffrer les données.

14. Système selon la revendication 9, dans lequel les un ou plusieurs processeurs comprennent une pluralité de processus de serveur distribués, chacun des processus de serveur maintenant le matériel de clé et exécutant une boucle pour supprimer le matériel de clé de la mémoire à l'horodatage de suppression.

15. Système selon la revendication 14, dans lequel la pluralité de processus de serveur distribués sont situés dans une même région physique.
